# EUROPÄISCHE PATENTANMELDUNG

(11) **EP 0 594 167 A1**
(43) Veröffentlichungstag der Anmeldung: **27.04.1994**
(21) Anmeldenummer: 93117050.0
(22) Anmeldetag: 21.10.1993
(51) Int. Cl.: B01D 29/11, B01D 33/11

(54) **Vorrichtung zum Entfernen von Abscheidegut aus einer in einem Gerinne strömender Flüssigkeit**

(30) Priorität: 23.10.1992 DE 4235903
(71) Anmelder: Huber, Hans-Georg, D-92334 Berching (DE)
(72) Erfinder: Huber, Hans-Georg, D-92334 Berching (DE)
(74) Vertreter: Rehberg, Elmar, Dipl.-Ing.

(57) **Zusammenfassung**

Eine Vorrichtung zum Entfernen von Abscheidegut aus einer in einem Gerinne (3) strömenden Flüssigkeit sieht eine Abscheidefläche (7) zur Ablagerung des Abscheideguts auf ihrer Innenseite vor und ist mit einer Schneckenfördereinrichtung (11) mit Förderwendel (12) ausgestattet, wobei durch eine Relativbewegung zwischen Abscheidefläche (7) und Förderwendel (12) unter Kontakt Abscheidegut schräg aufwärts gefördert wird. Die Abscheidefläche (7) ist als eine in Umfangsrichtung des Zylinders durchgehende Fläche mit offenen Stirnflächen (8) ausgebildet, so daß die Flüssigkeit und das Abscheidegut ausschließlich durch die eingangsseitige Stirnfläche (8) einströmen können, die Flüssigkeit jedoch in etwa radial an allen Stellen des Umfangs der zylindermantelförmigen Abscheidefläche (7) ausströmt. Zwischen den Wandungen (4, 5) des Gerinnes (3) und der eingangsseitigen Stirnfläche ist eine den übrigen Querschnitt absperrende Wandung (10) vorgesehen.

## Beschreibung

Die Erfindung bezieht sich auf eine Vorrichtung zum Entfernen von Abscheidegut aus einer in einem Gerinne strömenden Flüssigkeit, mit einer zylindermantelförmigen, flüssigkeitsdurchlässigen Abscheidefläche zur Ablagerung des Abscheideguts auf ihrer Innenseite, und mit einer parallel zur Abscheidefläche angeordneten, schräg aufwärts gerichteten und zur Abwurfstelle des Abscheideguts führenden, als Schneckenfördereinrichtung mit Gehäuse, Welle und Förderwendel ausgebildeten Förderstrecke für das Abscheidegut, wobei durch eine Relativbewegung zwischen Abscheidefläche und Förderwendel unter Kontakt Abscheidegut von der Abscheidefläche abgenommen und schräg aufwärts gefördert wird. Diese Vorrichtung kann insbesondere in Kläranlagen eingesetzt werden, ist jedoch vorteilhaft für andere Bereiche der Technik verwendbar, beispielsweise der Textilindustrie, der Kunststoffindustrie, in Schlachthöfen u. dgl., und zwar immer dann, wenn ein Abscheidegut in mehr oder weniger fester Form aus einer Flüssigkeit, insbesondere Wasser, herausgeholt werden soll. Bei dem Abscheidegut kann es sich um Rechen- und/oder Siebgut handeln, also um Gut, welches auch relativ grobstückig anfällt. Andererseits kann das Abscheidegut aber auch eine relativ feine Konsistenz aufweisen, wie beispielsweise ein Filtergut.

Eine Vorrichtung der eingangs beschriebenen Art zum Entfernen von Rechen- und/oder Siebgut aus in einem Gerinne strömender Flüssigkeit ist aus der DE-PS 37 16 434 bekannt. Diese Vorrichtung weist einen bis zur Sohle des Gerinnes reichenden, schräg aufwärts gerichteten, teilweise in die Flüssigkeit eintauchenden, zylindermantelförmigen Rost mit durchgehenden Roststäben und zwischen diesen gebildeten Längsspalten auf, die hier die Abscheidefläche bilden.

Parallel zum Rost ist eine als Schneckenfördereinrichtung mit Gehäuse, Welle und Förderwendel ausgebildete Förderstrecke für das Abscheidegut vorgesehen. Die Abscheidefläche in Form des Rosts erstreckt sich nur über einen Teil des Umfangsbereichs. Der Umfangsbereich, der durch die Schrägstellung oben zu liegen kommt, ist auf etwa 180° offen gestaltet, so daß hier die Zuströmung der mit dem Abscheidegut belasteten Flüssigkeit erfolgen kann. Die am unteren Ende des Rosts vorgesehene Stirnfläche dient der Lagerung der Förderwendel, die unter Kontakt an dem Rost entlangstreichend das Abscheidegut abnimmt, nach oben fördert und so den Rost immer wieder reinigt. Der Durchmesser des zylindermantelförmigen Rosts entspricht dabei in etwa der Gerinnebreite, wobei die Abscheidefläche sich etwa über 180° des Umfangs erstreckt. Die Förderwendel kann im Bereich ihrer Überlappung mit der Abscheidefläche auf ihrem äußeren Umfang mit einer Borstenleiste, einer elastischen Abstreiflippe o. dgl. versehen sein. Diese Borstenleiste unterliegt einem starken Verschleiß, da sich z. B. bei Anwendung in der Klärtechnik an der Abscheidefläche nicht nur Schwimm- und Schwebestoffe ablagern, sondern z. B. auch Steine, die zu einer erhöhten Beanspruchung der Borstenleiste führen. Infolge der etwa radialen Zuströmung im oberen Bereich ist die Größe der nutzbaren Abscheidefläche grundsätzlich beschränkt. Sie wird auf etwa 180° des Umfangs beschränkt sein, wenn sich der Durchmesser des zylindermantelförmigen Rosts nicht allzu sehr von der Gerinnebreite unterscheidet. Eine wesentliche Überschreitung von 180° des Umfangs ist nicht möglich.

Aus der DE-PS 36 30 755 ist eine Vorrichtung zum Entfernen von Rechen- und/oder Siebgut aus in einem Gerinne strömender Flüssigkeit bekannt, bei der ebenfalls eine Fördereinrichtung mit einer angetriebenen Förderschnecke mit Gehäuse, Welle und Förderwelle Anwendung findet. Diese Förderstrecke beginnt in einem Einwurftrichter für das Rechen- oder Siebgut. Der Bereich des Einwurftrichters wird umspannt bzw. umgeben von einem umlaufend angetriebenen Fangrost als Abscheidefläche, die sich zwar um 360° erstreckt, jedoch nur teilweise als Abscheidefläche genutzt werden kann. Die Höhe des Wasserstands begrenzt die Größe der nutzbaren Abscheidefläche. Maßgebend für die nutzbare Höhe des Wasserstands ist wiederum die Höhe des Einwurftrichters an seiner tiefsten Stelle. Da hier die Fördereinrichtung nicht in Kontakt zu der Abscheidefläche kommt, ist eine Ablöseeinrichtung erforderlich, um das Abscheidegut zu veranlassen, sich von der Abscheidefläche zu lösen und in den Einwurftrichter herabzufallen.

Der Erfindung liegt die Aufgabe zugrunde, eine Vorrichtung der eingangs beschriebenen Art aufzuzeigen, bei der Teile der Fördereinrichtung unter direktem Kontakt mit der Abscheidefläche auch eine Ablösefunktion erfüllen, die Verwendung stark verschleißgefährdeter Bürstenleisten an der Förderwendel zu vermeiden.

Erfindungsgemäß wird dies bei der Vorrichtung der eingangs beschriebenen Art dadurch erreicht, daß die Abscheidefläche als eine in Umfangsrichtung des Zylinders durchgehende Fläche mit offenen Stirnflächen ausgebildet ist, und daß zwischen den Wandungen des Gerinnes und der eingangsseitigen Stirnfläche eine den übrigen Querschnitt absperrende Wandung vorgesehen ist, so daß die Flüssigkeit und das Abscheidegut unter Aufstauwirkung vor der Wandung ausschließlich durch die eingangsseitige Stirnfläche einströmt, jedoch die Flüssigkeit in etwa radial an allen Stellen des Umfangs der zylindermantelförmigen Abscheidefläche auströmt.

Als Abscheidefläche kann somit die gesamte Zylindermantelwandung genutzt werden. Ein Einwurftrichter kommt in Fortfall, so daß stattdessen ein direkter Kontakt zwischen Teilen der Fördereinrichtung und der Abscheidefläche genutzt wird. Die Zuströmung erfolgt ausschließlich über die eingangsseitige, offen gestaltete Stirnfläche und die Ausströmung der von dem Abscheidegut befreiten Flüssigkeit erfolgt in etwa radial an allen Stellen des Umfangs der zylinderförmigen Abscheidefläche. Der Durchmesser der zylindrischen Abscheidefläche ist in dem Maße kleiner als die Breite des Gerinnes gewählt, daß die Abströmung der gereinigten Flüssigkeit in den seitlichen Bereichen nicht behindert wird. Damit ist vorteilhaft die nutzbare Abscheidefläche bei konstanten Gerinneabmessungen im Vergleich zum Stand der Technik erheblich vergrößert. Die Durchströmgeschwindigkeit der Abscheidefläche ist damit vorteilhaft verkleinert und die Abscheidewirkung verbessert. Da das Abscheidegut an der Abscheidefläche nicht mehr aus dem Niveau der strömenden Flüssigkeit herausgehoben werden muß, sondern die Vorrichtung auch unterhalb dieses Niveaus arbeiten kann, sind weitere vorteilhafte Einsatzmöglichkeiten gegeben. Die Vorrichtung erlaubt auch die Achse der Fördereinrichtung vergleichsweise steil anzustellen, so daß sich vorteilhaft eine geringe Baulänge der Vorrichtung ergibt, verbunden mit den Vorteilen der Einbaumöglichkeit in einen Schacht oder eine vergleichsweise kurze Einhausung. Ein ganz wesentlicher Vorteil liegt noch darin, daß ein hoher Auswaschgrad des Abscheideguts erreicht wird, was einerseits durch den hohen Wasserstand im Innenraum der zylinderförmigen Abscheidefläche begünstigt wird. Andererseits wird gerade beim einem hohen Wasserstand das Abscheidegut im Innenraum der trommelförmigen Abscheidefläche in dauernder Bewegung und in der Schwebe gehalten, wobei dieser Auswaschvorgang stattfindet. Dieser Waschmaschinen-Trommeleffekt wird durch die Förderwendel der Schneckenfördereinrichtung inganggesetzt und kann durch weitere Maßnahmen, wie insbesondere Waschdüsen, gesteigert werden. Auch das zusätzliche Eintragen von Luft ist möglich, um die Trennung von in der Flüssigkeit verbleibenden organischen Bestandteilen von dem Abscheidegut während des Auswaschvorgangs zu intensivieren.

Die Abscheidefläche kann in einem durch die Schrägstellung gebildeten unteren Umfangsbereich mit geschlossener Fläche ausgebildet sein, wobei die Abscheidefläche stillstehend und die Förderwendel angetrieben vorgesehen sind. Durch diesen geschlossenen Flächenbereich wird im unteren Umfangsbereich zwar auf einen Teil wirksamer Abscheidefläche verzichtet, es ergibt sich jedoch der besondere Vorteil, daß an dieser Stelle, an der die wesentliche Förderung erfolgt, die Mitnahme des Abscheideguts durch die Förderwendel vereinfacht und verbessert ist, ohne daß z. B. Steine und Kies zu einer Verhakung mit den Durchbrechungen in der Abscheidefläche führen könnten. Der mit geschlossener Fläche versehene Bereich kann in Umfangsrichtung auch mehr oder weniger weit ausgedehnt sein, beispielsweise auch bis in einen Bereich von etwa 180° des Umfangs. Auch eine asymmetrische Anordnung dieser geschlossenen Fläche, abgestimmt auf die Drehrichtung der Förderwendel, ist sinnvoll.

Wichtig ist, daß zwischen Förderwendel und Abscheidefläche eine Relativbewegung unter direktem Kontakt stattfindet, damit auf diese Art und Weise Abscheidegut abgenommen, hinweggefördert und die Abscheidefläche immer wieder gereinigt wird. Diese Relativbewegung kann auch dadurch erreicht werden, daß die Förderwendel in dem mit der Abscheidefläche überlappenden Bereich stillstehend und die Abscheidefläche umlaufend angetrieben vorgesehen sind. In diesem Fall erstrecken sich die Durchbrechungen in der Abscheidefläche auf 360° und ein geschlossener Flächenbereich ist vermieden.

Es ist aber auch möglich, daß die Förderwendel, zumindest in dem mit der Abscheideflächen überlappenden Bereich, sowie die Abscheidefläche mit unterschiedlichen oder unterschiedlich gerichteten Geschwindigkeiten angetrieben sind. Wichtig ist auch hier nur die Relativbewegung.

Die Abscheidefläche kann als Sieb oder Rost ausgebildet sein. Die Ausbildung im Einzelnen richtet sich bevorzugt nach der Art des Abscheideguts.

Sofern die Abscheidefläche umlaufend angetrieben ist, kann auf der Außenseite der Abscheidefläche eine Reinigungs- und Ablöseeinrichtung in Form einer Bürstenleiste oder einer Düsenleiste vorgesehen sein. Die Reinigungseinrichtung dient dazu, das abgeschiedene Gut oder zumindest einen Teil davon abzulösen, damit es leichter von den Elementen der Fördereinrichtung ergriffen werden kann. Andererseits ist damit die Gewähr dafür gegeben, daß das Abscheidegut in die Flüssigkeit zurückgefördert und durch die Bewegung desselben die Auswaschwirkung verbessert wird. Die Düsenleiste dient zum Ausspritzen von Waschwasser, was auch unterhalb des Flüssigkeitsspiegels erfolgen kann.

Die Förderwendel kann in dem mit der Abscheidefläche überlappenden Bereich wellenlos vorgesehen sein, um die Strömung im Innern der trommelförmigen Abscheidefläche nicht zu behindern.

Sofern die Förderwendel in dem überlappenden Bereich stillstehend vorgesehen ist, kann sie an der den übrigen Querschnitt absperrenden Wandung befestigt oder zumindest mit abgestützt sein.

Die den übrigen Querschnitt absperrende Wandung kann als Staublech ausgebildet sein, welches den gesamten Querschnitt mit Ausnahme der einströmseitigen Stirnfläche der zylindermantelförmigen Abscheidefläche abdeckt.

Bei den verschiedenen Ausführungsformen können Waschdüsen vorgesehen sein, durch deren Waschwassereinleitung eine vermehrte Bewegung der Flüssigkeit in dem Innenraum der zylindermantelförmigen Abscheidefläche erfolgt. Durch diese Waschdüsen wird Waschwasser zur Ausströmung gebracht, wobei die Strömungsrichtung so gewählt ist, daß der Umwälzvorgang im Innenraum der zylindermantelförmigen Abscheidefläche intensiviert wird. Damit werden organische Bestandteile, die an den Schwimm- und Sinkstoffen anhaften, von diesen vermehrt gelöst. Die organischen Bestandteile verbleiben in der Flüssigkeit und treten auch durch die Abscheidefläche hindurch, so daß sie mit der Flüssigkeit einer biologischen Abwasserreinigung bewußt zugeführt werden können. Gleichzeitig wird das Abscheidegut durch diesen Auswaschvorgang weiter gereinigt, so daß die Geruchsbelästigung beim Herausführen des Abscheidegutes aus der Flüssigkeit und einem nachfolgenden Trocknungs- und Verbrennungsvorgang vermindert ist. Die Waschdüsen können vor der einlaufseitigen Stirnfläche, also außerhalb des Innenraumes der Abscheidefläche vorgesehen sein. Bei Verwendung einer wellenlosen, im Mittelbereich offenen Förderwendel steht auch dieser Bereich des Innenraumes für die Anordnung zur Verfügung. Wenn eine Förderwendel Anwendung findet, die stillstehend angeordnet ist und somit die Abscheidefläche trommelartig angetrieben ist, besteht die Möglichkeit, die Waschdüsen direkt an diesen Förderwendeln bzw. in deren Bereich zu lagern. In vielen Fällen ist es aber auch möglich, unabhängig von der Ausbildung der Abscheidefläche und der Förderwendel im Einzelnen die Waschdüsen außerhalb der zylindermantelförmigen Abscheidefläche anzuordnen, beispielsweise parallel zu einer Mantellinie.

Zusätzlich ist es auch möglich, eine Einrichtung zum Eintragen von Luft in den Innenraum der zylinderförmigen Abscheidefläche vorzusehen. Für die Anordnung dieser Einrichtung ergeben sich wiederum verschiedene Möglichkeiten, ähnlich wie bei der Anordnung der Waschdüsen. Durch diese Einrichtung werden Luftblasen zum Ausströmen gebracht, die durch den Innenraum der zylinderförmigen Abscheidefläche aufsteigen, sich bevorzugt an organischen Teilen ansetzen und diesen einen Auftrieb verleihen, so daß sie innerhalb der bewegten Flüssigkeit im Innenraum der Abscheidefläche nach oben aufsteigen, so daß eine Trennung zu den sich im unteren Bereich ansammelnden Sinkstoffen stattfindet. Diese Trennwirkung trägt dazu bei, daß eine Separierung zu den Sinkstoffen erfolgt, die als Abscheidestoffe abgeschieden werden, während die organischen Bestandteile in der Flüssigkeit verbleiben.

Die Erfindung wird anhand verschiedener Ausführungsbeispiele weiter erläutert und beschrieben. Es zeigen:
- Figur 1: eine schematisierte Seitenansicht der Vorrichtung in einer ersten Ausführungsform in einem Gerinne,
- Figur 2: einen Schnitt gemäß der Linie II-II in Figur 1,
- Figur 3: eine schematisierte Seitenansicht einer zweiten Ausführungsform,
- Figur 4: eine schematisierte Seitenansicht einer dritten Ausführungsform,
- Figur 5: einen Schnitt gemäß der Linie V-V in Figur 4,
- Figur 6: einen schematisierten Schnitt durch eine weitere Ausführungsform der Vorrichtung,
- Figur 7: einen Schnitt gemäß der Linie VII-VII in Figur 6,
- Figur 8: schematisierte Seitenansicht der Vorrichtung gemäß den Figuren 1 und 2 mit weiteren Elementen zur Intensivierung des Auswaschvorgangs und
- Figur 9: eine schematisierte Seitenansicht der Vorrichtung gemäß den Figuren 4 und 5 mit weiteren Elementen zur Intensivierung des Auswaschvorgangs.

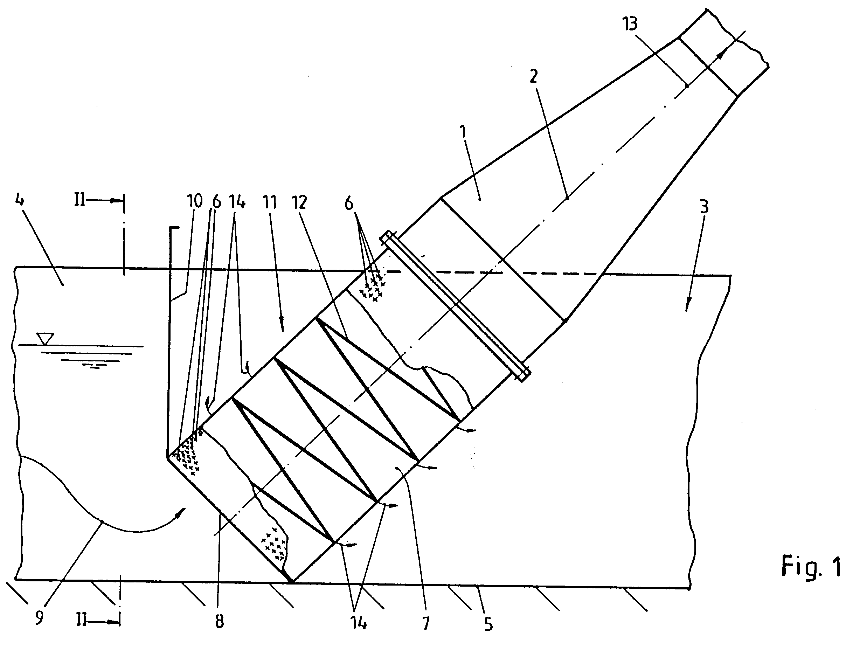

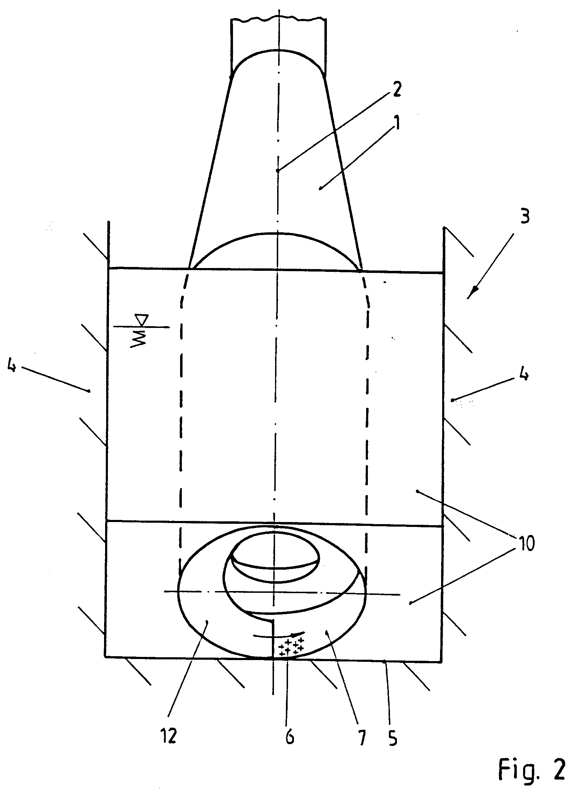

Die Vorrichtung gemäß den Figuren 1 und 2 weist ein Gehäuse 1 auf, welches zweckmäßig aus mehreren Abschnitten zusammengesetzt ist. Die Vorrichtung ist mit schrägstehender Achse 2 in ein Gerinne 3 eingebaut, welches von zwei Seitenwänden 4 und einem Boden 5 begrenzt wird. In dem Gerinne 3 strömt Flüssigkeit, die mit Abscheidegut belastet ist, von links nach rechts hindurch. Der unterste Abschnitt des Gehäuses 1 ist zylindermantelförmig mit Durchbrechungen 6 versehen, so daß ein starrer, stillstehender Siebkorb gebildet ist, der auf seiner Innenseite eine Abscheidefläche 7 bildet. Diese Abscheidefläche 7 erstreckt sich in Umfangsrichtung über 360°. Damit wird ein zylindrischer Körper gebildet, dessen eingangsseitige Stirnfläche offen ausgebildet ist, so daß hier die mit Abscheidegut beladene Flüssigkeit gemäß Pfeil 9 in das Innere des Siebkorbs einströmen kann. Der übrige Querschnitt des Gerinnes 3 im Anschluß an die eingangsseitige offene Stirnfläche 8 ist von einer Wandung 10 abgesperrt, die sich oberhalb und seitlich von der Stirnfläche 8 erstreckt und an die Seitenwände 4 sowie den Boden 5 des Gerinnes 3 anschließt. Die Wandung 10 kann als Staublech ausgebildet sein. Es versteht sich, daß auch die andere Stirnfläche, also die bezüglich des Siebkorbs ausgangsseitige Stirnfläche, offen gestaltet ist.

Im Innern des Gehäuses 1 ist eine Schneckenfördereinrichtung 11 untergebracht, die sich über die gesamte Länge der Vorrichtung erstreckt, wobei zumindest in Teilbereichen der Länge eine hier nicht dargestellte Welle sowie eine schematisch angesteuerte Förderwendel 12 vorgesehen sind. Die Förderwendel 12 erstreckt sich bevorzugt wellenlos in dem mit den Durchbrechungen 6 versehenen Teil des Gehäuses 1. Die Förderwendel 12 ist so ausgebildet, daß sie unter Kontakt an der Abscheidefläche 7 entlangstreicht, das abgeschiedene Abscheidegut aufnimmt und so die Abscheidefläche 7 immer wieder reinigt. Das Abscheidegut wird gemäß Pfeil 13 schräg aufwärts nach oben zu einer nicht dargestellten Abwurfstelle gefördert.

Es versteht sich, daß die Abscheidefläche 7 über ihren gesamten Umfang effektiv nutzbar ist, jedenfalls in einem Bereich, der durch den Wasserspiegel festgelegt ist. Es ist erkennbar, wie große Bereiche der mit den Durchbrechungen 6 versehenen Siebwandung unterhalb der Niveaulinie arbeiten. Die von dem Abscheidegut befreite Flüssigkeit kann dabei gemäß den Pfeilen 14 in Umfangsrichtung an allen Stellen austreten und abfließen. Aus Figur 2 sind die Breitenverhältnisse zwischen dem Durchmesser des Gehäuses 1 und der Breite des Gerinnes 3 erkennbar, so daß damit gleichzeitig ersichtlich ist, daß die Abströmung der Flüssigkeit nach dem Durchtritt durch die Durchbrechungen 6 seitlich nicht behindert wird. Die Vorrichtung kann mit ihrer Achse zur Horizontalen in einem Winkel von etwa 30 bis 60° geneigt angeordnet werden.

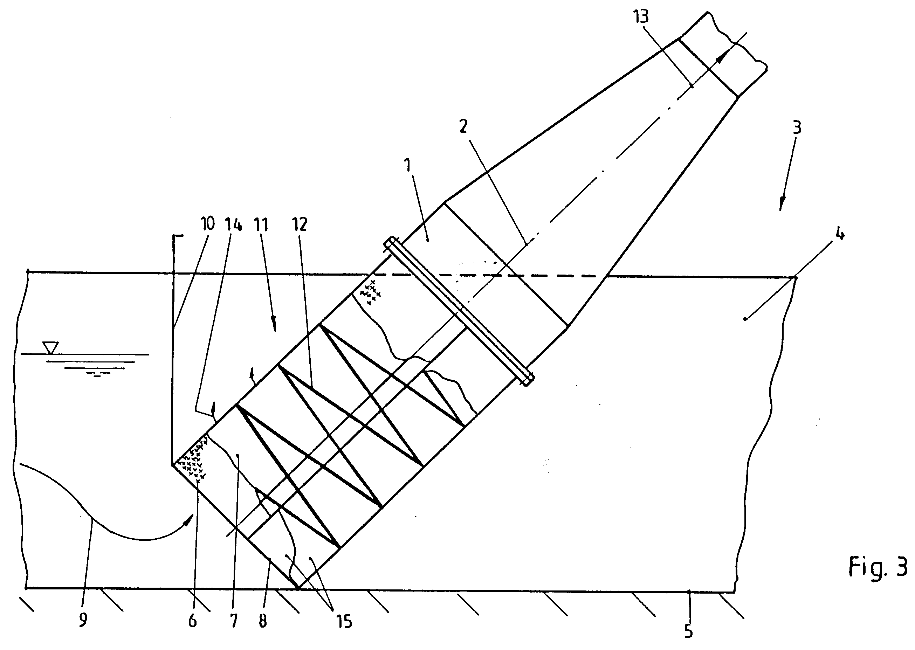

Die in Figur 3 dargestellte Ausführungsform der Vorrichtung stimmt in weiten Bereichen mit der Ausführungsform gemäß den Figuren 1 und 2 überein, d. h. auch hier ist die Abscheidefläche 7 stillstehend angeordnet, während die Förderwendel 12 umlaufend angetrieben wird. Der Siebkorb ist hier jedoch abweichend ausgebildet. Die Durchbrechungen 6 sind nur in einem Teilbereich über den Umfang angeordnet. In dem durch den schrägen Einbau gebildeten unteren Bereich 15 ist die Abscheidefläche 7 geschlossen ausgebildet, fehlen also die Durchbrechungen 6. Dieser untere Bereich 15 mit geschlossener Wandung kann sich über einen Umfangsbereich zwischen etwa 60 und 180° erstrecken, um die Förderung von abgeschiedenem Gut zu begünstigen und die Lebensdauer der Vorrichtung zu erhöhen. Harte Gegenstände wie Steine, Kies o. dgl. werden so von dem mit den Durchbrechungen 6 versehenen Bereich ferngehalten und können daher bei der Aufwärtsförderung auch nicht eingeklemmt werden. Auch bei dieser Ausführungsform kann die effektiv nutzbare Abscheidefläche 7 noch hinreichend groß gewählt werden.

Die verschiedenen Ausführungsbeispiele haben den Vorteil, daß die durch die Summe der Durchbrechungen 6 geschaffene freie Durchtrittsfläche vergleichsweise größer ausgebildet ist als im Stand der Technik. Da die Vorrichtung keine Bestandteile aufweisen muß, die unbedingt über den Wasserspiegel nach außen herausragen, erhöht sich die effektiv nutzbare Fläche erheblich. Dies erbringt den weiteren Vorteil, daß die Strömungsgeschwindigkeiten im Bereich der Durchbrechungen 6 der Abscheidefläche 7 herabgesetzt werden. Andererseits wird mit den Vorrichtungen ein hoher Auswaschgrad des Abscheideguts erzielt. Das Abscheidegut wird nicht immer sofort und endgültig von der Förderwendel erfaßt und nach oben gefördert, sondern es gelangt mehrmals von der Abscheidefläche 7 wieder in den Innenraum und damit in den Strudel der dort vorliegenden Flüssigkeitsbewegung, bis es letztendlich an einem Abscheidepunkt von der Förderwendel 12 nach oben mitgenommen wird.

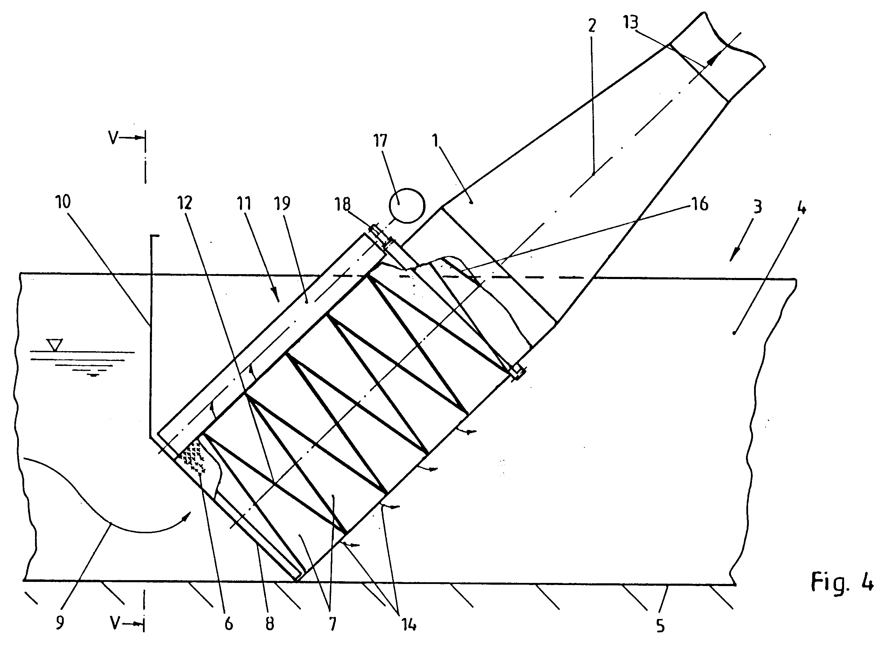

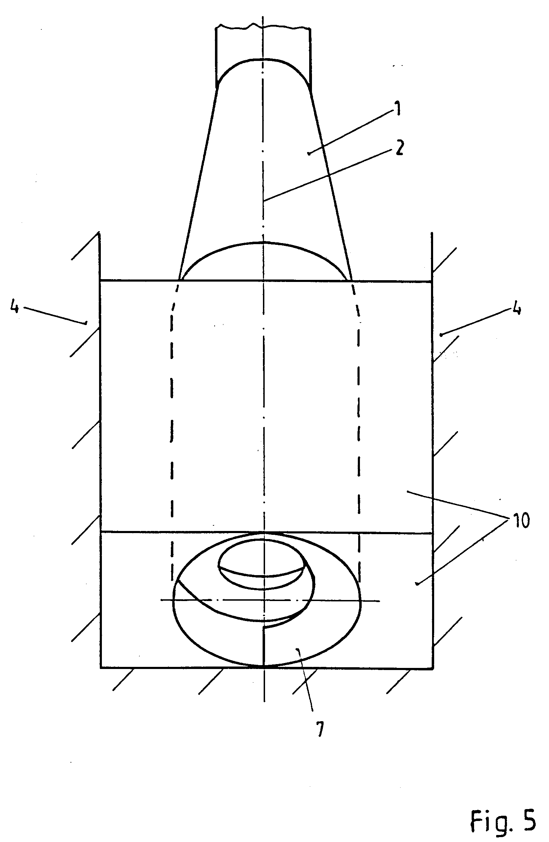

Die in den Figuren 4 und 5 dargestellte Ausführungsform sieht auch ein Gehäuse 1 aus mehreren Abschnitten vor, wobei die oberen Gehäuseabschnitte stillstehend angeordnet sind und diesen Gehäuseabschnitten eine von oben umlaufend angetriebene Förderwendel 16 zugeordnet ist. In dem unteren Abschnitt jedoch, der die Abscheidefläche 7 bildet, ist die Förderwendel 12, getrennt von der Förderwendel 16, stillstehend angeordnet, und beispielsweise durch die auch hier offen ausgebildete Stirnfläche 8 hindurch an der Wandung 10 abgestützt. Stattdessen ist jetzt die zylinderförmige Wandung mit den Durchbrechungen 6, die auf ihrer Innenseite die Abscheidefläche 17 bildet, angetrieben, was über einen schematisch angedeuteten Motor 17 mit Zahnrad 18 erfolgen kann. Bevorzugt in dem durch den Schrägeinbau gebildeten oberen Bereich des ersten Abschnitts kann auf der Außenseite eine Reinigungs- und Ablöseeinrichtung 19 angeordnet sein, die als direkt oder indirekt angetriebene Borstenwalze, als Spritzdüsenleiste o. dgl. ausgebildet sein kann. Durch diese Reinigungs- und Ablöseeinrichtung wird die Ablösung des abgeschiedenen Guts von der Abscheidefläche 7 begünstigt, so daß das Abscheidegut in den Strudel der Flüssigkeit im Innern des ersten Abschnitts der Vorrichtung zurückgelangen kann.

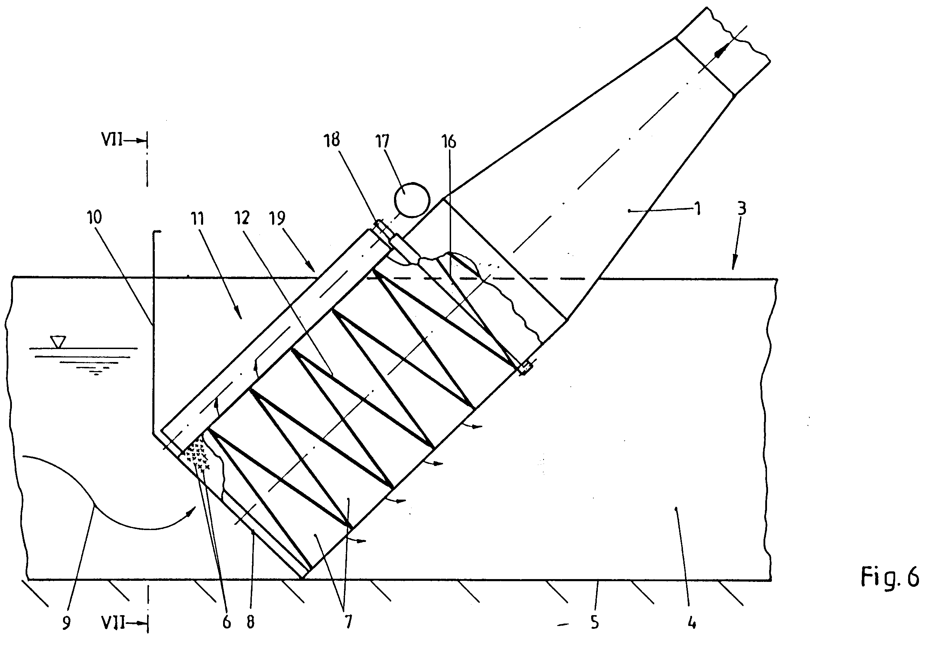

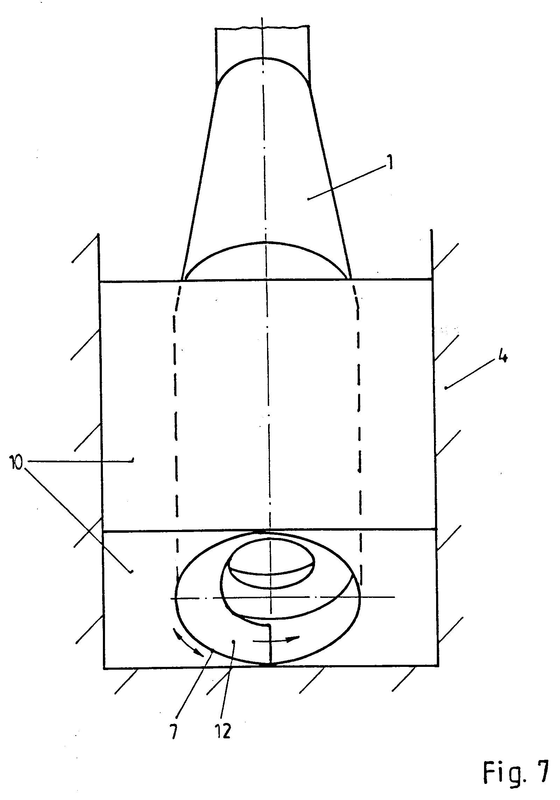

Bei der Ausführungsform der Vorrichtung gemäß den Figuren 6 und 7 werden beide Teile angetrieben, und zwar sowohl die mit den Durchbrechungen 6 versehene Abscheidefläche 7 wie auch die Förderwendel 12. Der Antrieb hat so zu erfolgen, daß eine Relativbewegung stattfindet, was entweder durch unterschiedliche Umfangsgeschwindigkeiten oder auch durch unterschiedliche Drehrichtungen, wie in Figur 7 angedeutet, geschehen kann.

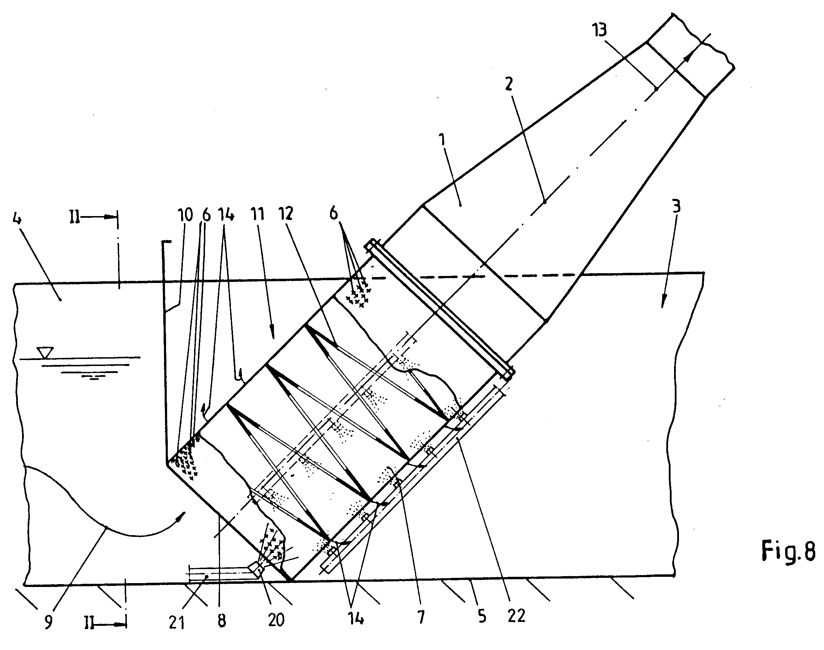

Die Ausführungsform der Figur 8 baut auf derjenigen gemäß den Figuren 1 und 2 auf. Es ist noch einmal deutlich aufgezeigt, daß die Förderwendel 12 als wellenlose Förderwendel ausgebildet sein kann, so daß der Mittelbereich des Innenraums, der von der Abscheidefläche 7 umschlossen wird, freibleibt. Zur Intensivierung des Waschmaschinen-Trommeleffektes, also der Umwälzung der Flüssigkeit mit dem Abscheidegut im Innenraum sind ein oder mehrere Waschdüsen 20 vorgesehen, die über ein Zuleitungsrohr 21 an eine Waschwasserversorgung mit Pumpe angeschlossen sind. Über die Waschdüsen 20 wird Waschwasser so gerichtet in den von der Abscheidefläche 7 umschlossenen Innenraum eingeleitet, daß die Bewegung verstärkt wird. Die Waschdüsen 20 können vorzugsweise vor der Stirnfläche 8 angeordnet sein. Durch die in der Mitte offene Gestaltung der Förderwendel 12 besteht jedoch auch die Möglichkeit, die Waschdüsen 20 in diesem Bereich anzuordnen.

Weiterhin ist eine Einrichtung 22 zum Eintragen von Luft in den Innenraum der zylindermantelförmigen Abscheidefläche 7 vorgesehen. Eine solche Luftleitung erstreckt sich beispielsweise außerhalb der Abscheidefläche 7 etwa parallel zu einer Mantellinie des Zylinders, so daß die Luftblasen durch die Durchbrechungen 6 der Abscheidefläche 7 in den Innenraum gelangen und dort aufsteigen können. In gestrichelter Linienführung ist etwa im Bereich der Achse 2 angedeutet, daß die Einrichtung 22 auch hier vorgesehen sein könnte. Sie kann auch baulich vereinigt mit den Waschdüsen 20 hier angeordnet sein. Die Ausströmrichtung der Luft ist für die beabsichtigte Wirkung nicht besonders wichtig. Es kommt hier nicht auf die Intensivierung einer Rührwirkung an, sondern darauf, daß die Luftblasen mit organischen Bestandteilen in Kontakt treten, um letztlich einen Auftrieb für die organischen Bestandteile hervorzurufen und damit eine Separierung zu den Sinkstoffen zu bewirken.

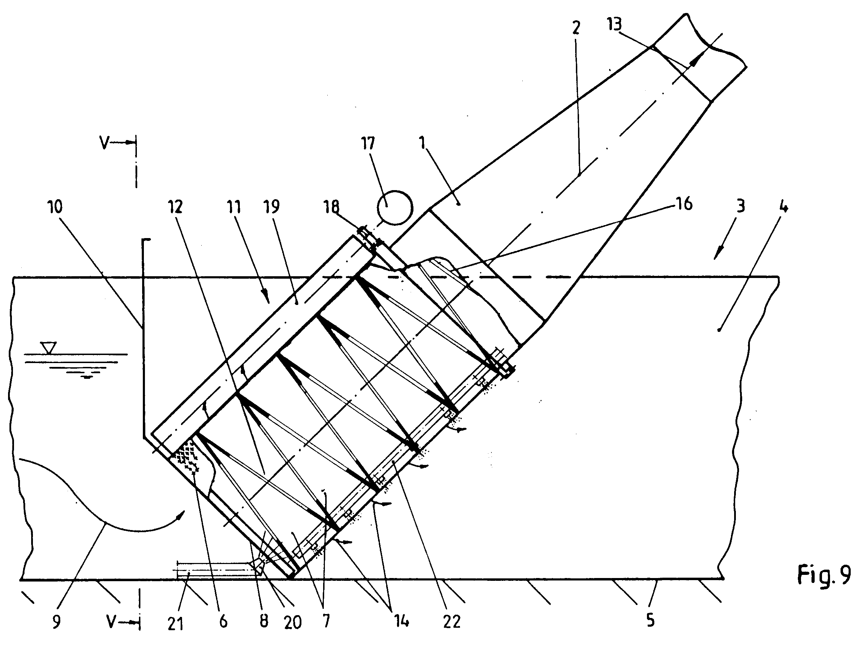

Wie Figur 9 zu erkennen gibt, lassen sich die anhand von Figur 8 beschriebenen Maßnahmen auch dann anwenden, wenn eine Vorrichtung gemäß den Figuren 4 und 5 Anwendung findet, d. h. eine stillstehende Förderwendel 12 in Verbindung mit einer rotierend angetriebenen Abscheidefläche 7. Während die Anordnung der Waschdüsen 20 beispielhaft wiederum außerhalb der Abscheidefläche 7 vor deren Stirnwand 8 angedeutet ist, besteht für die Unterbringung der Einrichtung 22 für die Luftzuleitung die Möglichkeit, diese an der stillstehenden Förderwendel vorzusehen, etwa in einem Bereich, in welchem sie den Transport des Abscheidegutes nach oben nicht behindern. Die Richtung, mit der die Luftblasen aus der Einrichtung 22 austreten, kann auch so gerichtet sein, daß die organischen Bestandteile bevorzugt durch die Abscheidefläche 7 bzw. deren Durchbrechungen 6 nach außen hindurchtreten. Ein gewisser Anteil der Luftblasen wird sich aber ohnehin durch den Innenraum der Abscheidefläche 7 nach oben bewegen und mit dem Abscheidegut in innigen Kontakt gelangen.

### Bezugszeichenliste:

- 1: = Gehäuse
- 2: = Achse
- 3: = Gerinne
- 4: = Seitenwand
- 5: = Boden
- 6: = Durchbrechung
- 7: = Abscheidefläche
- 8: = Stirnfläche
- 9: = Pfeil
- 10: = Wandung
- 11: = Schneckenfördereinrichtung
- 12: = Förderwendel
- 13: = Pfeil
- 14: = Pfeil
- 15: = unterer Bereich
- 16: = Förderwendel
- 17: = Motor
- 18: = Zahnrad
- 19: = Reinigungs- und Ablöseeinrichtung
- 20: = Waschdüse
- 21: = Zuleitungsrohr
- 22: = Einrichtung

## Patentansprüche

1. Vorrichtung zum Entfernen von Abscheidegut aus einer in einem Gerinne strömender Flüssigkeit, mit einer zylindermantelförmigen, flüssigkeitsdurchlässigen Abscheidefläche zur Ablagerung des Abscheideguts auf ihrer Innenseite, mit einer parallel zur Abscheidefläche angeordneten, schräg aufwärts gerichteten und zur Abwurfstelle des Abscheideguts führenden, als Schneckenförderenrichtung mit Gehäuse, Welle und Förderwendel ausgebildenden Förderstrecke für das Abscheidegut, wobei durch eine Relativbewegung zwischen Abscheidefläche und Förderwendel unter Kontakt Abscheidegut von der Abscheidefläche abgenommen und schräg aufwärts gefördert wird, dadurch gekennzeichnet, daß die Abscheidefläche (7) als eine in Umfangsrichtung des Zylinders durchgehende Fläche mit offenen Stirnflächen (8) ausgebildet ist, und daß zwischen den Wandungen (4, 5) des Gerinnes (3) und der eingangsseitigen Stirnfläche (8) eine den übrigen Querschnitt absperrende Wandung (10) vorgesehen ist, so daß die Flüssigkeit und das Abscheidegut unter Aufstauwirkung vor der Wandung (10) ausschließlich durch die eingangsseitige Stirnfläche (8) einströmt, jedoch die Flüssigkeit in etwa radial an allen Stellen des Umfangs der zylindermantelförmigen Abscheidefläche (7) auströmt.

2. Vorrichtung nach Anspruch 1, dadurch gekennzeichnet, daß die Abscheidefläche (7) in einem durch die Schrägstellung gebildeten unteren Umfangsbereich (15) mit geschlossener Fläche ausgebildet ist, und daß die Abscheidefläche (7) stillstehend und die Förderwendel (12) angetrieben vorgesehen sind.

3. Vorrichtung nach Anspruch 2, dadurch gekennzeichnet, daß sich der mit geschlossener Fläche versehene Bereich (15) über etwa 180° des Umfangs erstreckt.

4. Vorrichtung nach Anspruch 1, dadurch gekennzeichnet, daß die Förderwendel (12) in dem mit der Abscheidefläche (7) überlappenden Bereich stillstehend und die Abscheidefläche (7) umlaufend angetrieben vorgesehen sind.

5. Vorrichtung nach Anspruch 1, dadurch gekennzeichnet, daß die Förderwendel (12), zumindest in dem mit der Abscheidefläche (7) überlappenden Bereich sowie die Abscheidefläche (7) mit unterschiedlichen oder unterschiedlich gerichteten Geschwindigkeiten angetrieben sind.

6. Vorrichtung nach Anspruch 2, 4 oder 5, dadurch gekennzeichnet, daß die Abscheidefläche (7) als Sieb oder Rost ausgebildet ist.

7. Vorrichtung nach Anspruch 4 oder 5, dadurch gekennzeichnet, daß auf der Außenseite der Abscheidefläche (7) eine Reinigungs- und Ablöseeinrichtung (19) in Form einer Bürstenwalze oder Düsenleiste vorgesehen ist.

8. Vorrichtung nach Anspruch 2, 4 oder 5, dadurch gekennzeichnet, daß die Förderwendel (12) in dem mit der Abscheidefläche (7) überlappenden Bereich wellenlos vorgesehen ist.

9. Vorrichtung nach Anspruch 4, dadurch gekennzeichnet, daß die Förderwendel (12) an der den übrigen Querschnitt absperrenden Wandung (10) befestigt ist.

10. Vorrichtung nach Anspruch 1 oder 9, dadurch gekennzeichnet, daß die den übrigen Querschnitt absperrende Wandung (10) als Staublech ausgebildet ist.

11. Vorrichtung nach einem oder mehreren der Ansprüche 1 bis 10, dadurch gekennzeichnet, daß Waschdüsen (20) vorgesehen sind, durch deren Waschwassereinleitung eine vermehrte Bewegung der Flüssigkeit in dem Innenraum der zylindermantelförmigen Abscheidefläche (7) erfolgt.

12. Vorrichtung nach einem oder mehreren der Ansprüche 1 bis 11, dadurch gekennzeichnet, daß eine Einrichtung zum Eintragen von Luft in den Innenraum der zylindermantelförmigen Abscheidefläche (7) vorgesehen ist.
